# EUROPEAN PATENT SPECIFICATION

(11) **EP 0 889 632 B1**
(45) Date of publication and mention of the grant of the patent: **17.12.2003**
(21) Application number: 98305290.3
(22) Date of filing: 02.07.1998
(51) Int. Cl.: H04N 1/00, H04N 1/40

(54) **Method for detecting leading edge of print medium**
Verfahren zur Kantendetektion von einem Druckmedium
Procédé pour détecter le bord avant d'un support d'impression

(30) Priority: 02.07.1997 KR 9730535; 21.07.1997 KR 9733918
(43) Date of publication of application: 07.01.1999
(73) Proprietor: Samsung Electronics Co., Ltd., Suwon-si, Kyungki-do (KR)
(72) Inventor: Lee, Dong-yul, Yongin-si, Kyungki-do (KR)
(74) Representative: Sanderson, Nigel Paul

(56) References cited:
- EP-A- 0 589 136
- EP-A- 0 765 070
- US-A- 5 086 486
- US-A- 5 402 252
- US-A- 5 414 522
- PATENT ABSTRACTS OF JAPAN vol. 1996, no. 08, 30 August 1996 (1996-08-30) -& JP 08 097976 A (FUJI XEROX CO LTD), 12 April 1996 (1996-04-12)

## Description

### BACKGROUND OF THE INVENTION

### Field of the Invention

The present invention relates to computer peripheral devices, such as printers, facsimile machines or copiers, having a scanner function. More particularly, the present invention relates to a method which employs a scanner module for detecting the leading edge of a sheet of print medium (e.g. paper) in a computer peripheral device.

### Discussion of Related Art

Along with recent trends in multimedia technology, common computer peripheral devices e.g. printers have begun to incorporate scanner functions into desktop computer systems. In all such multi-function peripherals, a sheet of print medium (paper) must be fed and its leading edge detected in order to determine the paper position and thereby initiate the desired function, ie printing work, scanning work, etc. For this purpose, a paper detection sensor has conventionally been employed. An information signal indicating such detection is relayed as an electronic signal to a central processing unit (CPU) where a control signal is generated to drive a line feed motor. Therefore, the CPU requires a dedicated input/output port for the paper detection signal, which increases product cost and lowers the processor's efficiency. Also, as paper detection sensors have proven to be inherently failure prone, there is the added problem of reduced reliability and the accompanying inconvenience of repair.

US 5 414 522 relates to a method of determining the size of a document placed on the platen of, for example, a photocopier. The method described in D1 involves scanning the platen in main scanning and sub-scanning directions to determine the position of the edge of the document in accordance with a boundary between white and black pixel data values. In US 5 414 522, the document (paper) is in a fixed location and the scanning of the document to determine its edges is carried out in order to determine its size.

EP-A-0 765 070 discloses an apparatus which employs a scanner to detect when the leading edge of a document to be processed has reached a position at which processing, for example copying or scanning, is to be carried out.

### SUMMARY OF THE INVENTION

Accordingly, in order to overcome such drawbacks in the conventional art, the present invention seeks to provide a method which utilises a scanner module, in lieu of a paper detection sensor, to detect the point at which a sheet of print medium reaches a work position.

To achieve these and other advantages and in accordance with the present invention, there is provided a method for detecting the leading edge of a sheet of print medium, as defined in claim 1.

In the above method, the data of the scanned data block is stored such that a scanning level of pixel data for a given horizontal line is regularly stored in an address memory, and the determining step searches for a boundary on which both near-absolute black and near-absolute white pixel data values are indicated in the scanning and storing step.

### BRIEF DESCRIPTION OF THE ATTACHED DRAWINGS

A more complete appreciation of the invention, and many of the attendant advantages thereof, will be readily apparent as the same becomes better understood by reference to the following detailed description when considered in conjunction with the accompanying drawings in which like reference symbols represent the same or similar components, wherein:
FIG 1 is a flow chart showing the method according to the present invention; and
FIG 2 is an explanatory view of the vertical scanning and rasterisation of the slices of a block of letter-size print media.

### DETAILED DESCRIPTION OF PREFERRED EMBODIMENT

In this specification, an example of scanning 2,551 slices is described, which corresponds to the maximum number of horizontal slices based on a scanning resolution of 300dpi across a sheet of standard letter-size print media. It should be appreciated that the present invention can be realised equally through the use of a fixed scanner module or a moveable (shuttle) scanner module.

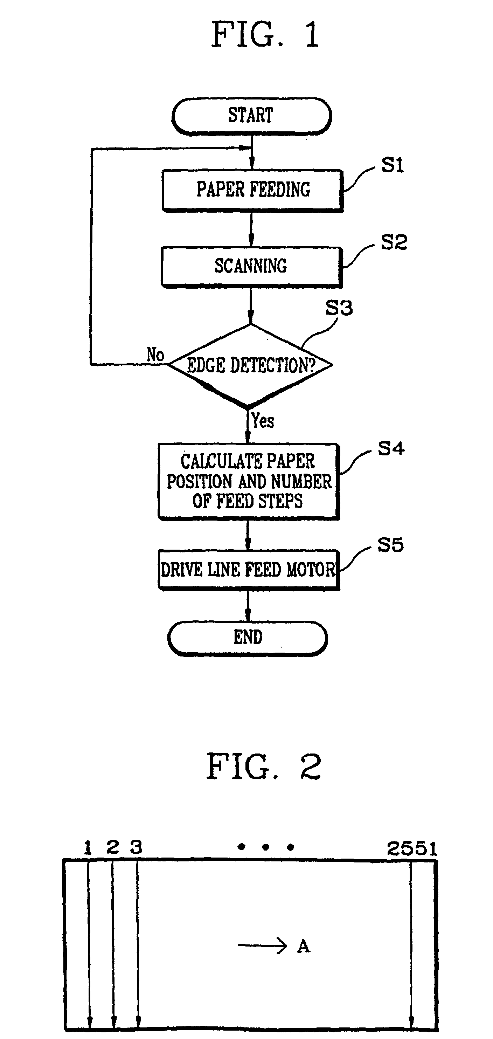

Referring to FIG 1, in a step S1 for performing an initial feeding process, a command is received from a computer system in order to carry out a function such as printing or scanning in an image forming apparatus. Thus, a line feed motor is driven and a sheet of print medium (e.g. paper) is initially fed. The line feed motor is typically a stepper motor which, considering the optical sensor width (ie slice length) of the scanner module, is minutely controlled in a manner which allows for sufficient precision so that the initial paper feeding does not cause the leading edge of the sheet to overshoot, which would result in a failure to detect the edge by surpassing the slice length of the first data block.

FIG 2 shows a data block comprised of slices which are scanned and rasterised in the "A" direction in step S2 in order to recognise (detect) an edge. If, after scanning the first block, the scanning results show that edge detection has not been recognised, it is determined that a line feed operation should be carried out again and the next data block is scanned and rasterised.

Assuming the travelling direction of a scanner module (or, in the event of a fixed scanner module, the rasterisation) as the X-axis, pixel data having corresponding Y-axis coordinates are stored regularly. The scanned data is stored as shown in the following table which shows an idealised example of the relative arrangement (memory address storage) of the date, given a slice length of 160 pixels.

| 1^{st} slice | | 2^{nd} slice | | ... | 2,551^{st} slice | |
|---|---|---|---|---|---|---|
| addr | data | addr | data | | address | data |
| 0 | 00000000 | 160 | 00000000 | ... | 0+(160x2550) | 00000000 |
| 1 | 00000000 | 161 | 00000000 | ... | 1+(160x2550) | 00000000 |
| . | . | . | . | ... | . | . |
| . | . | . | . | | . | . |
| . | . | . | . | | . | . |
| 104 | 00000000 | 264 | 00000000 | ... | 104+(160x2550) | 00000000 |
| 105 | 11111111 | 265 | 11111111 | ... | 105+(160x2550) | 11111111 |
| . | . | . | . | ... | . | . |
| . | . | . | . | | . | . |
| . | . | . | . | | . | . |
| 159 | 11111111 | 319 | 11111111 | ... | 159+(160x2550) | 11111111 |

As shown above, the first pixel of the first slice is stored at memory address 0000 and the first pixel of the second slice is stored at address 0160. That is, the pixel data of a given horizontal line (X-axis) is stored in a regular manner.

Pixel data in the vicinity of an edge of the print medium is delineated by scanning the corresponding block. The pixel data of the same horizontal line and one which falls beyond the edges of the print medium will have a pixel data value of nearly black, that is, zero. For 8-bit scanning, absolute black will have a pixel value of 00000000 and absolute white will have a pixel value of 11111111 (255). Accordingly, if a sheet of white print medium is being worked, the document area will have a value which approximates to the level of absolute white. By comparing a pixel data value on each horizontal line in one block, as in step S3, an edge (leading edge) will be a boundary on which both near-absolute black and near-absolute white pixel data values are indicated, which is shown in the above sample table as occurring between pixels 104 and 105 of the first slice. Likewise, the sheet position can be calculated from the thus-scanned pixel data on the same horizontal line, as an adjacent value of absolute black gives way to an adjacent value of absolute white, so that, in step S4, the driving (number of steps) of the line feed motor can be carried out to an exact position for printing, scanning, etc.

The sheet is fed to the predetermined work position in step S5, by driving the line feed motor by the calculated number of steps. According to the edge detection information, the driving direction of a line feed motor may be determined as required.

In the present invention, if high speed sheet feeding is desired, only a few slices may be scanned. If, on the other hand, precise sheet feeding is desired, the entire block should be scanned so that an exact sheet position may be obtained. The above trade-off between feeding speed and precision is independent of whether a fixed scanner module or a movable scanner module is employed.

As described above, the present invention has an effect in that the leading edge detection is performed by using a scanner module, ie without using a paper detection sensor, in a multi-function peripheral having a scanner function. The exact work (printing, scanning, etc) position is then calculated and a line feed motor is driven accordingly.

## Claims

1. A method of detecting the leading edge of a sheet of print medium, comprising the steps of:
driving a line feed motor at a predetermined speed to incrementally advance the sheet along a path of conveyance;
serially scanning and storing successive blocks of data at a location along said feed path of said sheet by slices, as said line feed motor advances the sheet along said path;
making a determination of the presence of the leading edge of the medium at said location by making sequential comparisons of scanned and stored data within said successive blocks;
determining a position of the sheet on the basis of said edge determination, and determining a value for driving the line feed motor to control advancement of the sheet along said path, in accordance with the position of the sheet; and
driving the line feed motor according to said value.

2. The method according to Claim 1, wherein the data of the scanned data block is stored such that a scanning level of pixel data for a given horizontal line is regularly stored in an address memory.

3. The method according to Claim 2, wherein the scanning level is separated into 256 levels.

4. The method according to Claim 1, wherein said step of making a determination of the presence of the leading edge of the medium searches for a boundary on which both near-absolute black and near-absolute white pixel data values are indicated in said scanning and storing step.

5. The method according to claim 1 wherein the predetermined driving speed of the line feed motor is set in accordance with the slice length of the scanned data block.

6. A method according to claim 1 wherein said second driving step is selectively carried out in the forward or reverse direction based on said leading edge determination.

7. A method according to claim 1 wherein the scanning is performed using a fixed scanner module.

8. A method according to claim 1 wherein the scanning is performed using a moveable scanner module.

## Patentansprüche

1. Verfahren zum Detektieren der Vorderkante eines Blattes eines Druckmediums, umfassend die Schritte:
Antreiben eines Zeilenvorschubmotors auf eine vorbestimmte Geschwindigkeit, um das Blatt entlang eines Förderweges zunehmend vorzurücken;
serielles Scannen und Speichern von aufeinanderfolgenden Blöcken von Daten an einem Ort entlang des genannten Zuführweges des genannten Blattes durch Schnitte, wenn der genannte Zeilenvorschubmotor das Blatt entlang des genannten Weges befördert;
Fällen einer Entscheidung hinsichtlich der Gegenwart der Vorderkante des Mediums an dem genannten Ort durch Durchführen sequentieller Vergleiche der gescannten und gespeicherten Daten innerhalb der genannten aufeinanderfolgenden Blöcke;
Bestimmen einer Position des Blattes auf Basis der genannten Kantenbestimmung und Bestimmen eines Wertes zum Antrieb des Zeilenvorschubmotors, um die Beförderung des Blattes entlang des genannten Weges in Abhängigkeit der Position des Blattes zu steuern/regeln, und
Antreiben des Zeilenvorschubmotors nach dem genannten Wert.

2. Verfahren nach Anspruch 1, wobei die Daten des gescannten Datenblocks derart gespeichert werden, daß ein Scann-Niveau der Pixeldaten für eine gegebene horizontale Linie regelmäßig in einem Adreßspcicher gespeichert wird.

3. Verfahren nach Anspruch 2, wobei das Scann-Niveau in 256 Niveaus aufgeteilt wird.

4. Verfahren nach Anspruch 1, wobei der Schritt des Fällens einer Entscheidung hinsichtlich der Gegenwart der Vorderkante des Mediums nach einer Grenze sucht, an der sowohl nahezu schwarze als auch nahezu weiße Pixel-Datenwerte in dem Scann- und Speicherschritt angegeben werden.

5. Verfahren nach Anspruch 1. wobei die vorbestimmte Antriebsgeschwindigkeit des Zeilenvorschubmotors in Abhängigkeit der Schnittlänge des gescannten Datenblocks gewählt wird.

6. Verfahren nach Anspruch 1, wobei der zweite Antriebsschritt, basierend auf der genannten Vorderkantenbestimmung, in der Vorwärts- oder Rückwärtsrichtung selektiv ausgeführt. wird.

7. Verfahren nach Anspruch 1, wobei das Scannen unter Verwendung eines festen Scanner-Moduls durchgeführt wird.

8. Verfahren nach Anspruch 1, wobei das Scannen unter Verwendung eines beweglichen Scanner-Moduls durchgeführt wird.

## Revendications

1. Procédé pour détecter le bord avant d'une feuille d'un milieu d'impression comprenant les étapes de :
entraîner un moteur d'avance ligne à une vitesse prédéterminée pour faire avancer de manière incrémentale la feuille le long d'un chemin de convoyage ou d'alimentation ;
balayer en série et stocker les blocs successifs de données en un endroit, le long dudit chemin d'alimentation de ladite feuille par tranches, au fur et à mesure que le moteur d'avance ligne fait avancer la feuille le long dudit chemin ;
faire une détermination de la présence du bord avant du milieu au dit endroit, en réalisant des comparaisons séquentielles des données balayées et stockées dans les blocs successifs ;
déterminer une position sur la feuille sur la base de ladite détermination de bord, et déterminer une valeur pour entraîner le moteur d'avance ligne pour contrôler l'avancement de la feuille le long dudit chemin, selon la position de la feuille ; et
entraîner le moteur d'avance ligne selon ladite valeur.

2. Procédé selon la revendication 1, **caractérisé en ce que** la donnée du bloc de données balayé est stockée de manière qu'un niveau de balayage de données de pixel pour une ligne horizontale donnée, est régulièrement stocké dans une mémoire d'adresses.

3. Procédé selon la revendication 2, **caractérisé en ce que** le niveau de balayage est séparé en 256 niveaux.

4. Procédé selon la revendication 1, **caractérisé en ce que** ladite étape de réalisation d'une détermination de la présence du bord avant du milieu, recherche une frontière sur laquelle, à la fois les valeurs de données de pixel, d'une part noir presque absolu et d'autre part blanc presque absolu, sont indiquées dans ladite étape de balayage et de stockage.

5. Procédé selon la revendication 1, **caractérisé en ce que** la vitesse prédéterminée du moteur d'avance ligne est réglée en fonction de la longueur de tranche du bloc de données balayé.

6. Procédé selon la revendication 1, **caractérisé en ce que** ladite seconde étape d'entraînement est sélectivement réalisée dans la direction avant ou arrière, en fonction de ladite détermination de bord avant.

7. Procédé selon la revendication 1, **caractérisé en ce que** le balayage est réalisé en utilisant un module de scanner fixé.

8. Procédé selon la revendication 1, **caractérisé en ce que** le balayage est réalisé en utilisant un module de scanner déplaçable.
